(19) Europäisches Patentamt
European Patent Office
Office européen des brevets

(11) Publication number: **0 167 130**
**A2**

(12) # EUROPEAN PATENT APPLICATION

(21) Application number: 85108045.7

(22) Date of filing: 28.06.85

(51) Int. Cl.⁴: A 42 B 3/02
C 08 G 63/18

(30) Priority: 29.06.84 US 626143

(43) Date of publication of application:
08.01.86 Bulletin 86/2

(84) Designated Contracting States:
AT BE CH DE FR GB IT LI LU NL SE

(71) Applicant: UNION CARBIDE CORPORATION
Old Ridgebury Road
Danbury Connecticut 06817(US)

(72) Inventor: Dickinson, Barry Lee
R.D. No. 2 10 Dalley Street
Whitehouse Station New Jersey 08889(US)

(74) Representative: Barz, Peter, Dr. et al,
Patentanwälte Dr. V. Schmied-Kowarzik Dipl.-Ing. G. Dannenberg Dr. P. Weinhold Dr. D. Gudel Dipl.-Ing. S. Schubert Dr. P. Barz Siegfriedstrasse 8
D-8000 München 40(DE)

(54) **Protective helmet made from a polyarylate.**

(57) Described herein are protective helmets made from a polyarylate resin. These helmets are able to withstand impact over a wide temperature range.

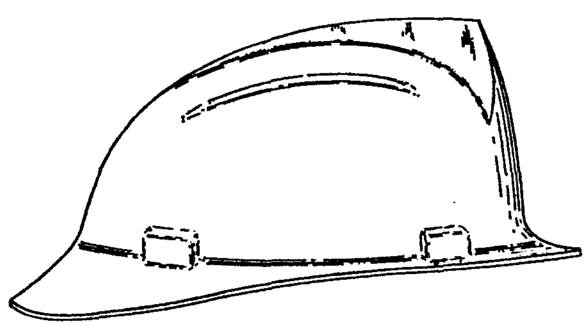

FIG. 1

EP 0 167 130 A2

Croydon Printing Company Ltd

## BACKGROUND OF THE INVENTION

This invention is directed to a protective helmet made from a polyarylate.

Protective helmets such as fire and safety helmets have been molded from thermoplastic resins. For example, U.S. Patent No. 4,101,983 describes a protective helmet made from polycarbonate or ABS. U.S. Patent NO. 3,502,074 describes a helmet made from polycarbonate resin. However, few thermoplastic resins are suitable for such an application due to the stringent requirements the helmet must pass. The helmet must be impact resistant over a wide temperature range such as from sub-zero conditions to the temperatures a fireman would be exposed to near a fire on a hot day. The thermoplastic resin which has been widely used for protective helmets is polycarbonate due to its high impact resistance. However, a very important test required by many protective agencies such as the National Fire Protection Association, requires the helmet to withstand impact after it is heated to a certain temperature. A helmet made from a polycarbonate resin does not pass the specifications required in this test.

In the present invention it has been found that a protective helmet made from polyarylate resin is able to pass the stringent requirements of said test.

THE INVENTION

This invention is directed to a protective helmet made from a polyarylate resin.

The helmet may be of any type, shape or style desired. Figure I depicts a particular fireman's helmet although many variations of this design are possible. In Fig. I, the right side is the front of the helmet and the right side is the back. It is about 7 inches high, 11 inches wide at the widest point and 15 inches long.

The helmet is made by methods well known in the art such as by, for example, injection or compression molding.

The polyarylates which are suitable for use in this invention are derived from a dihydric phenol and at least one aromatic dicarboxylic acid and have a reduced viscosity of from about 0.4 to greater than about 1.0, preferably from about 0.6 to about 0.8 dl/gm, as measured in chloroform (0.5 g/100ml chloroform) or other suitable solvent at 25°C.

A particularly desirable dihydric phenol is of the following formula:

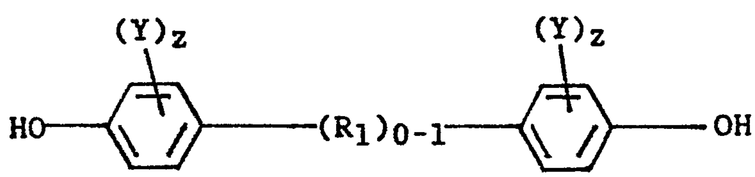

wherein Y is selected from, hydrogen, alkyl groups of 1 to 4 carbon atoms, chlorine or bromine, each z, independently, has a value of from 0 to 4, inclusive, and $R_1$ is a divalent saturated or unsaturated aliphatic hydrocarbon radical,

particularly an alkylene or alkylidene radical having from 1 to 6 carbon atoms, or a cycloalkylidene or cycloalkylene radicals having up to and including 9 carbon atoms, O, $SO_2$, or S. The dihydric phenols may be used individually or in combination.

The aromatic dicarboxylic acids that may be used in this invention include terephthalic acid, isophthalic acid, any of the naphthalene dicarboxylic acids and mixtures thereof, as well as alkyl substituted homologs of these carboxylic acids, wherein the alkyl group contains from 1 to about 4 carbon atoms, and acids containing other inert substituents, such as halides, alkyl or aryl ethers (wherein the alkyl groups contain preferably 1 to 6 carbon atoms and the aryl groups are preferably phenyl), and the like. Acetoxybenzoic acid can also be used. Preferably, mixtures of isophthalic and terephthalic acids are used. The isophthalic acid to terephthalic acid ratio in the mixture is about 0:100 to about 100:0, while the most preferred acid ratio is about 75:25 to about 50:50. Also, from about 0.5 to about 20 percent of aliphatic diacids containing from 2 to about 10 carbon atoms, such as adipic acid, sebacic acid, and the like may be additionally used in the polymerization reaction.

The polyarylates of the present invention can be prepared by any of the well known prior art polyester forming reactions, such as the reaction of the acid chlorides of the aromatic dicarboxylic acids with the dihydric phenols; the reaction of the diaryl esters of the aromatic dicarboxylic acids with the dihydric phenols; or the reaction of the aromatic diacids with diester derivatives of the

dihydric phenol. These processes are described in, for example, U.S. Patents 3,317,464; 3,948,856; 3,780,148; 3,824,213; and 3,133,898.

Other additives which may be used with the polyarylate include mineral filler such as carbonates including chalk, calcium carbonate, calcite and dolomite; silicates including mica, talc, wollastonite; silicon dioxide; glass spheres; glass powders; aluminum; clay; quartz; and the like. Additional additives include reinforcements such as glass fibers, carbon fibers, polyamides, silicon carbide, etc., pigments, such as titanium dioxide; thermal stabilizers such as zinc oxide; ultraviolet light stabilizers, plasticizers, and the like.

The mineral fibers and reinforcements may be used in amounts of up to about 30, preferably up to about 25 weight percent. The pigments are generally used in amounts of up to about 10 weight percent. The stabilizers are used in stabilizing amounts to stabilize the composition for the effect desired.

Additionally, the polyarylates can be used with up to about 25 weight percent of a polycarbonate, preferably those derived from the reaction of bisphenol-A and carbonyl chloride, a polyestercarbonate, or a polysulfone, preferably those derived from the reaction of bisphenol-A and dichlorodiphenyl sulfone.

The polyarylate is generally mixed with one or more of the optional additives in powder or granular form in and extruder and extruded into

strands, the strands chopped into pellets and the pellets and the pellets molded into the desired configuration of helmet.

EXAMPLE

The following example serves to give specific illustrations of the practice of this invention but they are not intended in any way to limit the scope of this invention.

Fire helmets in the shape of those in the Figure were molded from a polyarylate (Ardel D-100, sold by Union Carbide Corporation and prepared from bisphenol-A and a mixture of 50 mole percent each of terephthalic and isophthalic acid chlorides, by conventional methods) having a reduced viscosity of 0.66 as measured in p-chlorophenol at 49°C (0.2 g/100 ml) in a 400 Ton Reed Prentice injection molding machine using the following molding conditions:

| TEMPERATURES (°F) | | | Start |
|---|---|---|---|
| Barrel | Rear | | 710 |
| | Middle | | 690 |
| | Front | | 690 |
| | Adapter | | 710 |
| | Melt | | --- |
| | Mold (fixed) Controller Temps | | 220 |
| | (moving) " " | | 280 |
| | Hot Nozzle | | 480 |
| Times (seconds) | | Injection | 9 |
| | | Cycle | 87 |
| Pressure (psi) | | Hold | 10,000 |
| | | (No high pressure used) | |

The helmets were then tested according to the impact test set forth in Structural Fire Fighters Helmets 1979, NFPA 1972, Chapter 4.

All the helmets passed the test.

CLAIMS:

1. A protective helmet made from a polyarylate derived from at least one dihydric phenol and at least one aromatic dicarboxylic acid.

2. A helmet as defined in claim 1 wherein the dihydric phenol is of the following formula:

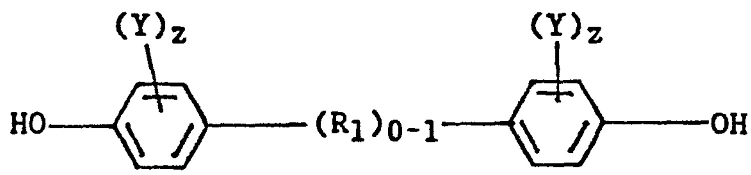

wherein Y is selected from, hydrogen, alkyl groups of 1 to 4 carbon atoms, chlorine or bromine, each z, independently, has a value of from 0 to 4, inclusive, and $R_1$ is a divalent saturated or unsaturated aliphatic hydrocarbon radical, particularly an alkylene or alkylidene radical having from 1 to 6 carbon atoms, or a cycloalkylidene or cycloalkylene radicals having up to and including 9 carbon atoms, O, $SO_2$, or S.

3. A helmet as defined in claim 2 wherein the dihydric phenol is bisphenol-A.

4. A helmet as defined in one or more of the claims 1 - 3 wherein the dicarboxylic acid is isophthalic acid or terephthalic acid, or mixtures thereof.

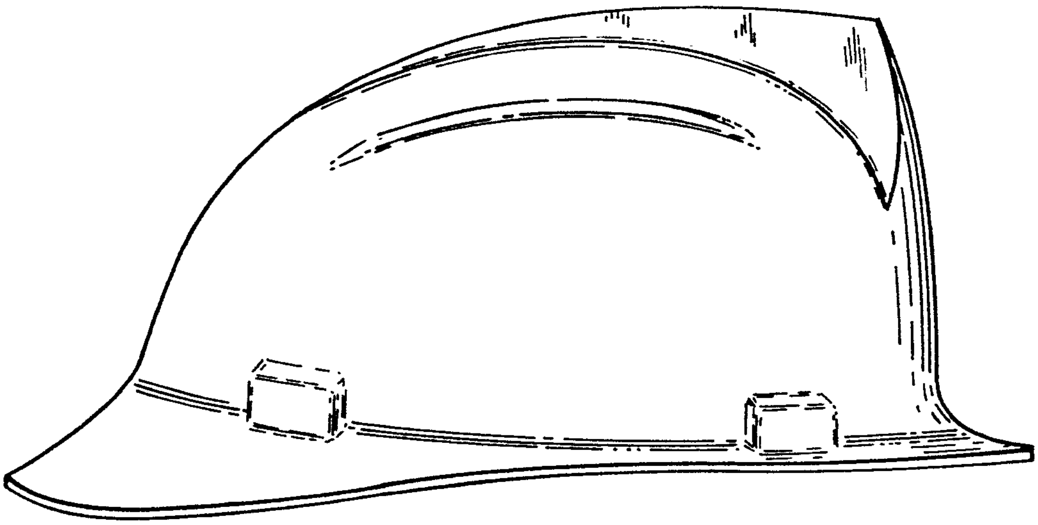

FIG. 1